# EUROPEAN PATENT APPLICATION

(11) **EP 4 657 206 A1**
(43) Date of publication of application: **03.12.2025**
(21) Application number: 23918381.7
(22) Date of filing: 26.01.2023
(51) Int. Cl.: G06F 1/3209, G06F 1/3234

(54) **ELECTRONIC CONTROL UNIT AND ELECTRONIC CONTROL SYSTEM**

(71) Applicant: Astemo, Ltd., Chiyoda-ku, Tokyo 1000004 (JP)
(72) Inventor: KATO, Motoaki, Hitachinaka-shi, Ibaraki 312-8503 (JP)
(74) Representative: Berghofer, Benedikt
(86) International application number: PCT/JP2023/002416
(87) International publication number: WO 2024/157416

(57) **Abstract**

An electronic control device (ECUm) includes a processor (204), a communication circuit (202), and a power supply IC (206). When a wake-up command is received, the communication circuit (202) sets an activation signal (INH-Vlevel) for the power supply IC (206) as a voltage level signal to an enable level. When a sleep command is received through the communication circuit (202), the processor (204) transmits a sleep instruction to the communication circuit (202) and transmits a power supply stop instruction to the power supply IC (206). The power supply IC (206) includes a priority wake-up processing unit (246) that, when attempting to stop a power supply according to the power supply stop instruction, continues generating a power supply voltage when the enable level of the activation signal (INH-Vlevel) for the power supply (206) is maintained.

## Description

### TECHNICAL FIELD

The present invention relates to an electronic control device, an electronic control system, and the like.

### BACKGROUND ART

In recent years, the number of electronic devices installed in a vehicle has increased, and accordingly, the power consumption of an electronic control system tends to increase. In particular, there is a growing demand to reduce standby current (parasitic current) while the vehicle is stopped, which directly leads to a drop in battery voltage.

Known techniques for reducing the power consumption of the electronic control system include, for example, a technique using a selective wake-up function to operate only necessary units among a plurality of ECUs (Electronic Control Units), a technique for putting a processor such as a CPU (Central Processing Unit) or an MPU (Micro Processing Unit) into a low power consumption mode, and a technique for effectively using a sub-processor such as a downsized sub-CPU or sub-MPU.

The technique using a selective wake-up function is described in, for example, Patent Document 1.

In addition, the technique for utilizing a low power consumption mode of a processor is described in, for example, Patent Document 2.

In addition, the technique using a sub-processor is described in, for example, Patent Document 3.

### CITATION LIST

### PATENT DOCUMENT

Patent Document 1: Japanese Unexamined Patent Publication No. 2022-132970
Patent Document 2: Japanese Unexamined Patent Publication No. 2016-76066
Patent Document 3: Japanese Unexamined Patent Publication No. 2017-144893

### DISCLOSURE OF THE INVENTION

### PROBLEM TO BE SOLVED BY THE INVENTION

However, in the current situation, a further reduction in power consumption is required. Therefore, there is an urgent need to realize an electronic control device or an electronic control system that can further reduce power consumption while maintaining necessary functions or reliability.

In addition, for example, when a power control ECU, which is a upper-level power control unit, performs power control of a plurality of lower-level power control units, the power control ECU may issue a sleep command to a certain ECU, but due to a rapid change in the vehicle situation or the like, the power control ECU may immediately thereafter issue a wake-up command to the same ECU.

In this case, since it takes a certain amount of time to stop the power supply IC (Integrated Circuit) included in the ECU according to the sleep command, a wake-up command is received during the process of stopping the power supply IC, resulting in a race condition between processing based on the sleep command and processing based on the wake-up command received after the sleep command.

In this case, it is preferable to avoid unnecessary power supply stop by giving priority to the processing based on the wake-up command, which is the latest command, and stopping the processing based on the sleep command that is being executed. In order to perform such advanced processing, it is conceivable to use a configuration in which a sub-processor is used in addition to a main processor.

However, the sub-processor can be said to be a redundant configuration, and the use of the sub-processor increases power consumption. In recent electronic control systems, many electronic control devices (electronic control units) are used. When the power consumption of one electronic control device increases, the power consumption of the entire electronic control system increases abruptly. This goes against the demand for low power consumption described above.

The above Patent Documents 1 to 3 make no mention of such a problem, nor do they mention any solutions to the problem.

The invention has been made in view of the aforementioned problem, and it is one object of the invention to promote low power consumption in an electronic control device and to make it possible to avoid unintended power supply stop when a communication circuit receives a wake-up command during the power supply stop processing of a power supply IC.

Other objects of the invention will become apparent to those skilled in the art by referring to the following exemplary aspects and best mode and the accompanying drawings.

### MEANS FOR SOLVING PROBLEM

In order to facilitate an understanding of the summary of the invention, aspects according to the invention will be exemplified below.

In a first aspect of an electronic control device of the invention, an electronic control device connected to a network includes: a processor that controls an operation of the electronic control device; a communication circuit that receives a sleep command and a wake-up command from another device connected through the network and includes a first interface for communication with the processor; and a power supply IC that generates a power supply voltage and includes a second interface for communication with the processor. The communication circuit includes an activation signal generation unit that sets an activation signal for the power supply IC as a voltage level signal to an enable level when the wake-up command is received, and the communication circuit transmits the received sleep command to the processor through the first interface. When the sleep command transmitted from the communication circuit is received, the processor transmits a sleep instruction to the communication circuit and transmits a power supply stop instruction to the power supply IC. The power supply IC includes a priority wake-up processing unit that, when attempting to stop a power supply according to the power supply stop instruction transmitted from the processor, continues generating the power supply voltage by giving priority to activation of the power supply IC due to the activation signal for the power supply IC being enabled over the power supply stop instruction when the enable level of the activation signal for the power supply IC transmitted from the communication circuit is maintained.

In the first aspect, the power supply IC includes the above priority wake-up processing unit. When a race condition occurs between processing based on a sleep command and processing based on a wake-up command received after the sleep command, the priority wake-up processing unit of the power supply IC performs processing (arbitration processing) to give priority to the wake-up command, which is the latest command.

Therefore, no sub-processor is required. Since a sub-processor and a power supply for the sub-processor can be eliminated, it is possible to reduce power consumption.

In addition, the communication circuit includes a wake-up signal generation unit.

When the wake-up command is received during the execution of processing for stopping the power supply IC, the activation signal generation unit of the communication circuit sets an activation signal for the power supply IC, which is a voltage level signal, to an enable level. As a result, the wake-up command has priority over the sleep command, and the priority wake-up processing unit of the power supply IC continues generating the power supply voltage.

When a voltage level signal is used as the activation signal for the power supply IC, instead of an edge trigger type activation signal, as well as a wake-up command is received, the communication circuit simply changes the voltage level of the activation signal for the power supply IC to the enable level.

Therefore, the configuration is simplified and complex signal processing is not required. This is advantageous for reducing the size and power consumption of the electronic control device (ECU).

In a second aspect dependent on the first aspect, the activation signal for the power supply IC may be transmitted from the communication circuit to the power supply IC through a signal path that does not go through a sub-processor.

In the second aspect, no sub-processor is provided in the transmission path of the activation signal for the power supply IC. Therefore, since a sub-processor and a power supply for the sub-processor are not required, it is possible to reduce power consumption, simplify the configuration, and reduce the burden on software.

In a third aspect dependent on the first or second aspect, the first interface and the second interface may be communication interfaces that transmit and receive data in synchronization with a rising edge or a falling edge of a clock.

In the third aspect, the first and second interfaces provided in the communication circuit to perform data communication with the processor are the above synchronous communication interfaces that transfer data in synchronization with the edge of a clock. For example, a highly reliable communication interface such as an SPI (Serial Peripheral Interface) can be used.

As described in the first aspect, the communication circuit performs data communication at a voltage level with the power supply IC.

That is, the communication circuit according to this aspect has a novel configuration that combines a data communication interface for performing synchronous communication with the processor and a signal output terminal (in a broad sense, a data communication interface) for performing voltage level data communication with the power supply IC.

In addition, if synchronous communication is also used for communication with the power supply IC, when the power supply IC is in the process of stopping the power supply at the timing of data transfer, the data transfer at the timing is invalidated. Therefore, the power supply IC cannot be notified that a wake-up command has been received.

In the case of a voltage level signal, after the voltage level of the signal changes, the changed voltage level is maintained, so that the power supply IC can have enough time to determine the voltage level of the received signal. That is, the power supply IC can determine the voltage level of the received activation signal at any timing. Therefore, the power supply IC can recognize that the wake-up command has been received.

In a fourth aspect dependent on any one of the first to third aspects, a monitoring circuit for the activation signal for the power supply IC may be provided between the processor and a signal path for transmitting the activation signal for the power supply IC output from the communication circuit to the power supply IC, the monitoring circuit monitoring a level of the activation signal for the power supply IC.

According to the fourth aspect, the processor can detect, through the above monitoring circuit, whether the activation signal for the power supply IC is at an enable level or a disable level, for example.

For example, when the communication circuit receives a sleep command, the sleep command is transmitted to the processor, and the processor decodes the sleep command and transmits a sleep instruction to the communication circuit.

When the communication circuit goes into a sleep state, the activation signal for the power supply IC changes from the enable level to the disable level. The processor can determine whether or not the communication circuit is operating correctly according to the sleep command by detecting the occurrence of a change in the voltage level through the monitoring circuit.

If there is no change in the voltage level of the activation signal for the power supply IC even after the processor issues a sleep instruction to the communication circuit, it can be inferred that there is, for example, an abnormality in the communication circuit, or an abnormality in the communication path between the communication circuit and the processor, or an abnormality in the monitoring circuit, and predetermined measures can be taken. This contributes to suppressing a decrease in the reliability of the electronic control device.

In a fifth aspect dependent on any one of the first to fourth aspects, the power supply IC may have a reset unit that outputs a reset signal to reset the processor, and when the priority wake-up processing unit continues generating the power supply voltage by giving priority to activation of the power supply IC due to the activation signal for the power supply IC being enabled, the reset signal may be output from the reset unit to cause an initial start of the processor.

In the fifth aspect, the power supply IC includes the above reset unit. When the power supply IC continues generating the power supply voltage, the power supply voltage is also supplied to the processor, and the processor continues to operate.

In this aspect, at this time, the reset unit outputs a reset signal to the processor to reset the processor.

In other words, once a wake-up command is received, the processor is reset and starts (initially starts) its operation from the initialized state.

When the processor is reset, for example, various counters, timers, input/output ports, and the like are initialized, so that the internal state of the processor returns to a predetermined initial state.

As a result, even if, for example, a partial trouble occurs inside the processor, its state returns to a predetermined initial state by reset. Therefore, various programs can be started normally.

This reduces the possibility of an abnormality (failure) occurring in the processor in the future, thereby contributing to suppressing a decrease in the reliability of the processor.

In a sixth aspect dependent on the fifth aspect, the power supply IC may cause the reset unit to output the reset signal by transitioning a state of the power supply IC to an initial state.

In the sixth aspect, a state of the power supply IC may transition to an initial state so that the reset signal is output from the reset unit of the power supply IC.

In other words, a power-on reset function of the power supply IC, that is, a function of outputting a reset signal to the processor when the power supply is turned on to start from the initial state, is used to enable the output of the reset signal.

According to this aspect, the reset signal can be output by using the existing function of the power supply IC, and no special processing for outputting the reset signal is required. Therefore, it is possible to reduce the burden on the power supply IC.

In a seventh aspect of the invention, an electronic control system of the invention includes a plurality of the electronic control devices according to any one of the first to sixth aspects, the plurality of electronic control devices being connected to the network.

According to the seventh aspect, the electronic control system is constructed by connecting a plurality of electronic control devices of the invention to the network.

The electronic control device of the invention has a function of further reducing power consumption while maintaining necessary functions or reliability as described above.

Therefore, it is possible to obtain an effect of significant reduction in power consumption for the entire electronic control system while maintaining reliability.

In recent years, the number of electronic devices installed in a vehicle has increased, and accordingly, the power consumption of an electronic control system tends to increase. In particular, there is a growing demand to reduce standby current (parasitic current) while the vehicle is stopped, which directly leads to a drop in battery voltage.

According to this aspect, it is possible to meet the demand described above. This contributes to the realization of, for example, electric cars and the like that can operate for a long time with a single battery charge.

### EFFECT OF THE INVENTION

According to the invention, it is possible to promote a reduction in the power consumption of an electronic control device and an electronic control system. In addition, when the communication circuit receives a wake-up command during power supply stop processing of the power supply IC, it is possible to avoid unintended power supply stop.

Those skilled in the art will easily understand that the exemplified aspects according to the invention can be further changed without departing from the spirit of the invention.

### BRIEF DESCRIPTION OF DRAWINGS

FIG. 1 is a drawing showing an example of the configuration of an electronic control system using a CAN (Controller Area Network);
FIG. 2 is a drawing showing a comparison between the configuration of a first comparative example having a sub-processor and a configuration not having a sub-processor (configuration adopted in FIG. 1);
FIG. 3 is a drawing showing the configuration and operation of an electronic control device in a second comparative example in which a sub-processor is not used and an edge trigger type signal is used as an activation signal for a power supply IC (Integrated Circuit);
FIG. 4 is a drawing showing an example of the specific configuration of an electronic control device in an embodiment of the invention in which a sub-processor is not used and a voltage level signal is used as an activation signal for a power supply IC;
FIG. 5 is a drawing showing a wake-up operation during power supply stop in the electronic control device according to the embodiment of the invention;
FIG. 6 is a drawing showing an example of the configuration of an electronic control device to which a monitoring circuit is added; and
FIG. 7 is a flowchart illustrating an example of a procedure for sleep and wake-up processing in the electronic control device in FIG. 6.

### BEST MODE(S) FOR CARRYING OUT THE INVENTION

The best mode described below are used to facilitate understanding of the invention. Therefore, those skilled in the art should be aware that the invention is not unduly limited by the embodiments described below. Hereinafter, an embodiment of the invention will be described with reference to the drawings.

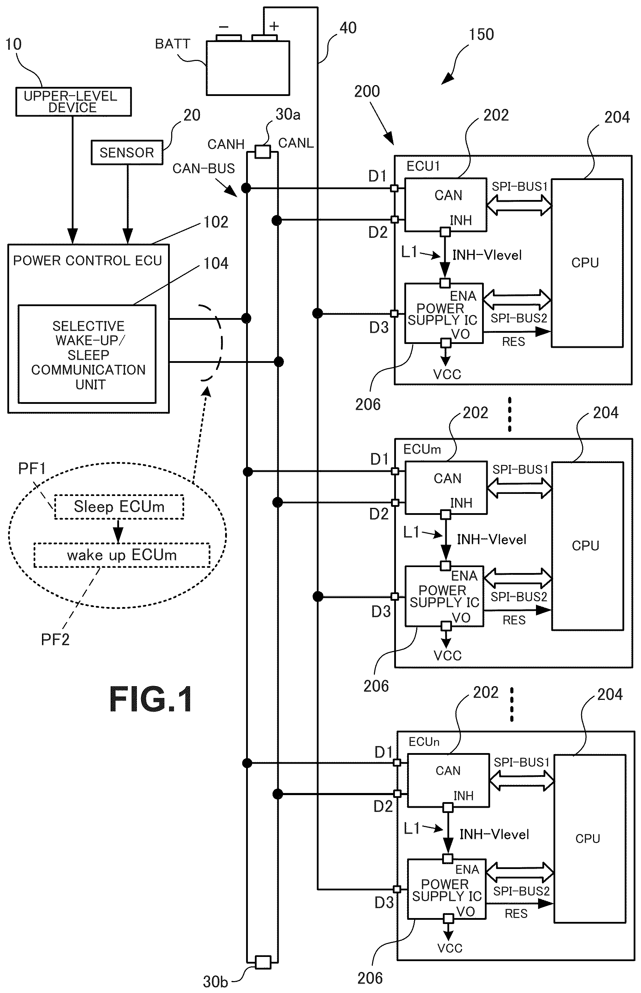

FIG. 1 is a drawing showing an example of the configuration of an electronic control system using a CAN (Controller Area Network).

In FIG. 1, an electronic control system 150 is assumed to be mounted in a vehicle. However, this is just an example, and the invention is not limited to this example.

A CAN bus (denoted as CAN-BUS in FIG. 1) is a two-wire communication bus including CANH with a high level and CANL with a low level. Termination resistors 30a and 30b are provided at the ends of CANH and CANL.

A plurality of ECUs (electronic control units) as electronic control devices are connected to the CAN bus. In FIG. 1, as a plurality of ECUs, ECU1 to ECUn (n is a natural number of 3 or more).

The ECU1 to ECUn are mounted in a vehicle and form an ECU group 200. For example, the ECUs can cooperate with each other through an in-vehicle network (CAN bus) to realize one or more functions.

In addition, a power control ECU 102 as a upper-level ECU that can selectively control sleep/wake-up of the ECU1 to ECUn are connected to the CAN bus. The power control ECU 102 is a upper-level unit in charge of power management for the lower-level ECU1 to ECUn, and corresponds to "another device connected to the network (CAN bus)".

The power control ECU 102 includes a selective wake-up/sleep communication unit 104. In addition, various commands are supplied from a upper-level device 10 to the power control ECU 102, and various sensor signals are supplied from a sensor 20 to the power control ECU 102.

The selective wake-up/sleep communication unit 104 can issue a selective sleep command PF1 and a selective wake-up command PF2 to an ECUm (m is a natural number satisfying 1 < m < n).

A battery BATT supplies power to each of the ECUs 1 to ECUn through a power line 40.

In the example of FIG. 1, each of the ECU1 to ECUn has the same configuration. In each ECU, the same portions are denoted by the same reference numerals. Hereinafter, the internal configuration of the ECUm will be described as an example.

The ECUm has communication terminals D1 and D2 connected to a CAN bus, a power supply terminal D3 connected to the power line 40, a CAN communication circuit (denoted as a CAN in the drawing) 202, a CPU (Central Processing Unit: hereinafter, referred to as a CPU) 204 as a processor, a power supply IC (Integrated Circuit) 206 that generates and outputs a power supply voltage VCC, a first SPI bus (denoted as an SPI-BUS1 in the drawing) for communication between the CAN communication circuit 202 and the CPU 204, a second SPI bus (denoted as an SPI-BUS2 in the drawing) for communication between the power supply IC 206 and the CPU 204, and a signal path for supplying an activation signal INH-Vlevel for the power supply IC as a voltage level signal output from the CAN communication circuit to the power supply IC 206, in other words, a signal path (signal line) L1 that does not include a sub-CPU serving as a sub-processor. In addition, the power supply IC can be referred to as a power supply circuit.

In addition, in the following description, the CAN communication circuit may be simply referred to as a communication circuit or a communication unit. In addition, the CAN communication circuit 202 has an INH terminal for outputting the activation signal INH-Vlevel for the power supply IC, which is a voltage level signal.

In addition, the power supply IC 206 has an ENA terminal for receiving the activation signal INH-Vlevel for the power supply IC and a VC terminal for outputting the power supply voltage VCC.

The CAN communication circuit 202 has a selective receiving function that, when the selective sleep command PF1 and the selective wake-up command PF2 issued by the power control ECU 102 are received, detects that it has been selected and performs predetermined processing for each command.

When the sleep command PF1 is received, the CAN communication circuit 202 transmits the received sleep command PF1 to the CPU 204.

The CPU 204 decodes the received sleep command PF1 to recognize the contents of the command, and transmits a sleep instruction to the CAN communication circuit 202 through the first SPI bus (SPI-BUS1) and transmits a power supply stop instruction to the power supply IC 206 through the second SPI bus (SPI-BUS2).

When the sleep instruction is received from the CPU 204, the CAN communication circuit 202 transitions to a sleep mode (standby mode or low power consumption mode). In addition, when the power supply stop instruction is received from the CPU 204, the power supply IC 206 performs processing to stop the generation of the power supply voltage VCC (which may be power supply stop processing or a transition to a standby mode).

In addition, when the selective wake-up command PF2 is received, the CAN communication circuit 202 detects that the wake-up command designates itself.

Since the CPU 204 is in a sleep state, the CAN communication circuit 202 does not notify the CPU 204 that the wake-up command has been received, but instead changes the activation signal INH-Vlevel for the power supply IC, which is a voltage level signal, from a disable level (L) to an enable level (H).

When it is detected that the activation signal INH-Vlevel for the power supply IC is at the enable level, the power supply IC 206 starts generating and outputting the power supply voltage VCC.

In addition, at this time, the power supply IC 206 may output a reset signal RES to the CPU 204 to cause the CPU 204 to perform an initial start. This point will be described later.

In addition, there may be a case where the CAN communication circuit 202 receives the wake-up command PF2 immediately after receiving the sleep command PF1, for example.

In this case, while the power supply IC 206 is performing the power supply stop processing in response to the power supply stop instruction from the CPU 204, a wake-up command is received and the activation signal INH-Vlevel for the power supply IC changes to the enable level.

In other words, processing based on the sleep command competes with processing based on the wake-up command received after the sleep command.

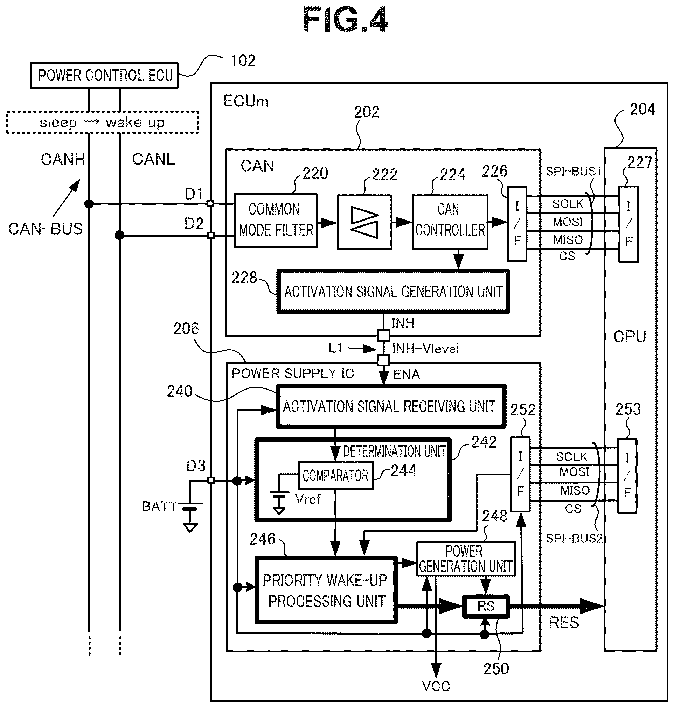

The power supply IC 206 has a priority wake-up processing unit (not shown in FIG. 1, reference numeral 246 in FIG. 4), and the priority wake-up processing unit 246 performs a process to avoid unnecessary power supply stop by giving priority to the processing based on the wake-up command, which is the latest command, and stopping the processing based on the sleep command that is being executed. This process will be described in detail later.

That is, in the ECUm of the invention shown in FIG. 1, when the processing based on the sleep command competes with the processing based on the wake-up command received after the sleep command, the power supply IC 206 performs arbitration processing to resolve the race condition.

It is possible to consider a configuration in which a sub-CPU performs such arbitration processing, but in this case, power consumption increases.

Therefore, in the electronic control system in FIG. 1, it is possible to deal with the race condition between conflicting commands described above with a simple and inexpensive configuration that does not use a sub-CPU.

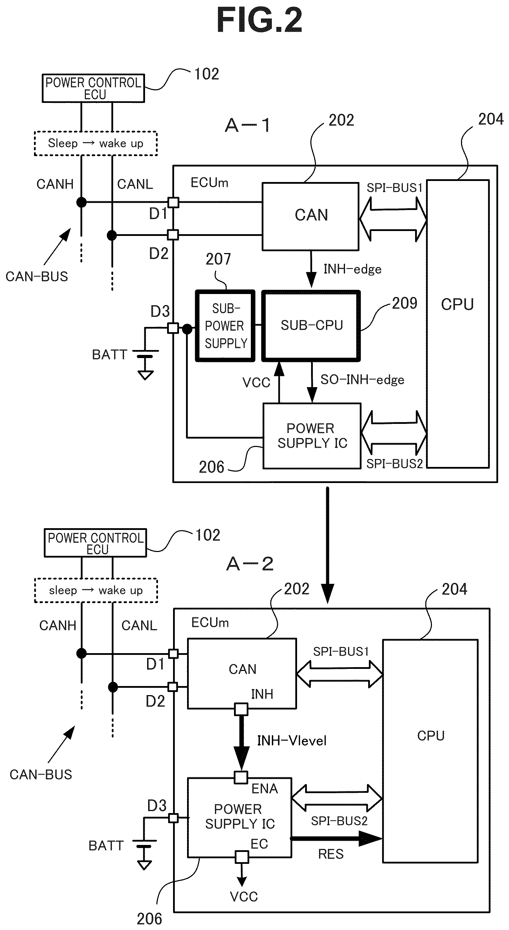

Next, reference is made to FIG. 2. FIG. 2 is a drawing showing a comparison between the configuration of a first comparative example having a sub-processor and a configuration not having a sub-processor (configuration adopted in FIG. 1). In areas A-1 and A-2 in FIG. 2, the same portions as in FIG. 1 are denoted by the same reference numerals. The same applies to the other drawings.

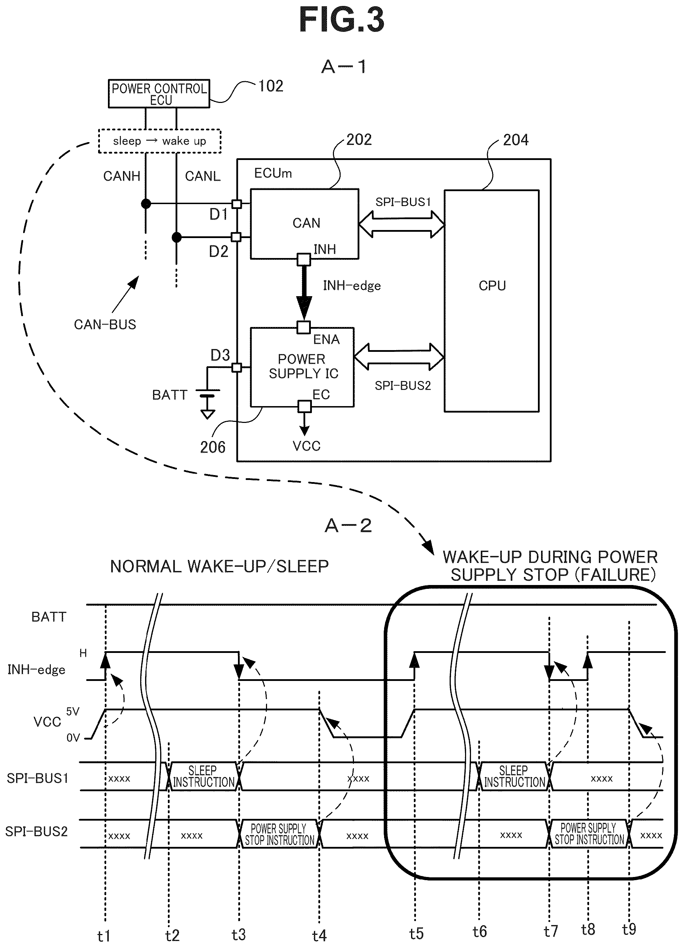

In addition, in A-1 and A-2 in FIG. 2, for convenience of explanation, the battery BATT is illustrated as being directly connected to the power supply terminal D3 of the ECUm. The same applies to FIG. 3, FIG. 4, FIG. 5, FIG. 6, and FIG. 8.

The first comparative example A-1 in FIG. 2 is a configuration examined by the present inventors prior to the invention, and is not a publicly known example.

In A-1 in FIG. 2, a sub-power supply 207 and a sub-CPU (sub-processor) 209 are provided. In addition, the signal output from the CAN communication circuit 202 is not a voltage level signal, but an edge trigger signal INH-edge having a rising edge or a falling edge for data transfer.

When the CAN communication circuit 202 receives a wake-up command during the stop process of the power supply IC 206, the CAN communication circuit 202 supplies the edge trigger signal INH-edge to the sub-CPU 209 to notify that the wake-up command has been received.

The sub-CPU 209 monitors the power supply voltage VCC generated by the power supply IC. Then, when it is detected in the power supply IC 206 that the power supply voltage VCC has been stopped according to the sleep instruction output from the CPU 204, an edge trigger signal SO-INH-edge is immediately supplied to the power supply IC 206 to restart the power supply IC. Therefore, it is possible to deal with even the race condition between the sleep command and the wake-up command.

However, the sub-power supply 207 and the sub-CPU (sub-processor) 209 can be said to have a redundant configuration, and the use of the sub-power supply 207 and the sub-CPU 209 increases power consumption.

In recent electronic control systems, a large number of electronic control devices (electronic control units) are used. If the power consumption of one electronic control device increases, the power consumption of the entire electronic control system increases abruptly. This goes against the demand for low power consumption described above.

Therefore, as shown in A-2 in FIG. 2, the sub-power supply 207 and the sub-CPU (sub-processor) 209 are removed, and the power supply IC 206 performs arbitration processing when a race condition occurs between the sleep command and the wake-up command,.

In addition, in A-2 in FIG. 2, the CAN communication circuit 202 supplies the activation signal INH-Vlevel for the power supply IC, which is a voltage level signal, to the power supply IC 206. In addition, the power supply IC 206 supplies the reset signal RES to the CPU 204 to cause the CPU 204 to perform an initial start.

Comparing A-1 and A-2 in FIG. 2, it is clear that A-2 in FIG. 2 has a simplified configuration, which allows for lower power consumption, smaller size, and lower cost.

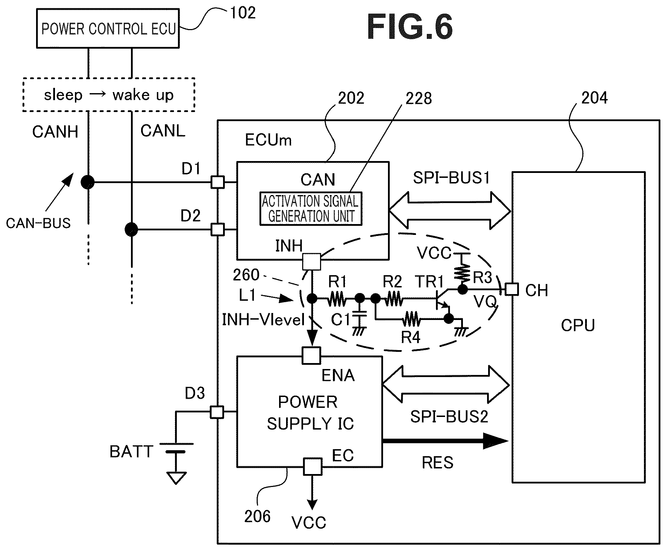

On the other hand, in the invention, the reliability of the ECU is also taken into consideration. Although not shown in A-1 in FIG. 2, as will be described later in FIG. 6, a monitoring circuit 260 for monitoring the activation signal INH-Vlevel for the power supply IC can be provided to identify the level of the activation signal for the power supply IC and perform failure diagnosis of related circuits.

In addition, by resetting the CPU 204 to perform an initial start as described above, various programs can be started normally. This helps to reduce the possibility of an abnormality (failure) occurring in the processor in the future.

In this manner, the electronic control device (ECU) of the invention can significantly reduce power consumption while ensuring the necessary reliability, and can also realize a simplified configuration, smaller size, and lower cost.

Next, the reason why a voltage level signal is used as an activation signal for the power supply IC in the invention, instead of an edge trigger signal, will be described. In conclusion, when an edge trigger signal is used, arbitration fails to cause unnecessary power supply stop if there is a race condition between a sleep command and a wake-up command. This point will now be described in detail.

Reference is made to FIG. 3. FIG. 3 is a drawing showing the configuration and operation of an electronic control device in a second comparative example in which a sub-processor is not used and an edge trigger type signal is used as an activation signal for a power supply IC.

The second comparative example shown in area A-1 in FIG. 3 is a configuration examined by the present inventors prior to the invention, and is not a publicly known example.

In the second comparative example shown in A-1 in FIG. 3, the voltage level signal ENH-Vlevel in the configuration of the invention described in A-2 in FIG. 2 is replaced with an edge trigger signal ENH-edge.

On the left side of area A-2 in FIG. 3, a timing chart showing the operation in normal wake-up/sleep processing is shown.

For example, when power is supplied from the battery BATT at time t1, the power supply IC 206 of the ECUm generates and outputs the power supply voltage VCC. Accordingly, the activation signal INH-edge for the power supply IC output from the CAN communication circuit 202 changes from the L level (disable level) to the H level (enable level).

In addition, when a sleep command is received, the CPU 204 transmits a sleep instruction to the CAN communication circuit 202 at time t2, and transmits a power supply stop instruction to the power supply IC 206 at time t3.

At time t4, in response to the sleep instruction, the activation signal INH-edge for the power supply IC changes to the L level (disable level). At time t4, in response to the power supply stop instruction, the generation of the power supply voltage VCC is stopped.

On the right side of A-2 in FIG. 3, a timing chart showing an operation when a wake-up command is received while the power supply IC is performing power supply stop processing is shown.

At time t5, the generation of the power supply voltage VCC starts, and the activation signal INH-edge for the power supply IC changes from the L level to the H level.

When a sleep command is received, the CPU 204 transmits a sleep instruction to the CAN communication circuit 202 at time t6, and transmits a power supply stop instruction to the power supply IC 206 at time t7. In response to the transmission of the sleep instruction at time t6, the activation signal INH-edge for the power supply IC changes to the L level.

The period from time t7 to time t9 is a period during which the power supply IC 206 performs the power supply stop processing.

At time t8 in this period, when a wake-up command is received, the activation signal INH-edge for the power supply IC changes to the H level and a rising edge occurs. Normally, in synchronization with this rising edge, it is detected that the activation signal INH-edge for the power supply IC is at H level, and the power supply IC 206 recognizes that the wake-up command has been received.

However, at time t8, the power supply IC 206 is in the power supply stop processing. Therefore, at the timing of time t8, it cannot be detected that the activation signal INH-edge for the power supply IC is at H level.

Therefore, at time t9, the generation of the power supply voltage VCC is stopped according to the sleep instruction. In other words, unnecessary power supply stop occurs. That is, wake-up during power supply stop fails.

Therefore, in the invention, the activation signal for the power supply IC is changed from the edge trigger signal INH-edge to the voltage level signal INH-Vlevel. In the case of a voltage level signal, after the voltage level of the activation signal changes, the changed voltage level is maintained, so that the power supply IC 206 can have enough time to determine the voltage level of the received activation signal.

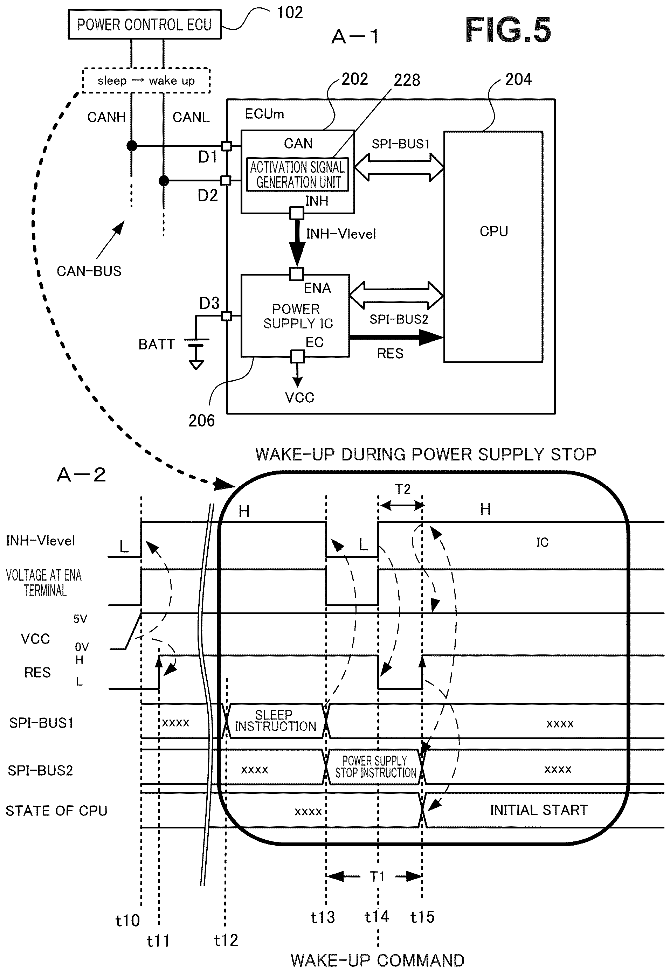

That is, the power supply IC 206 can determine the voltage level of the received activation signal at any timing. For example, the power supply IC 206 detects the voltage level of the wake-up signal at the end of the period during which the sleep instruction from the CPU 204 continues. Therefore, the power supply IC 206 can recognize that the wake-up command has been received. This will be described in detail with reference to FIG. 5.

Next, reference is made to FIG. 4. FIG. 4 is a drawing showing an example of the specific configuration of an electronic control device in an embodiment of the invention in which a sub-processor is not used and a voltage level signal is used as an activation signal for a power supply IC. In FIG. 4, the same portions as in the previous drawings are denoted by the same reference numerals.

The CAN communication circuit 202 has a common mode filter 220 for removing noise, a transceiver 222, a CAN controller 224, a first SPI interface unit (I/F) 228, and an activation signal generation unit 228 that generates and outputs an activation signal ENH-Vlevel for the power supply IC, which is a voltage level signal.

The activation signal ENH-Vlevel for the power supply IC is transmitted to the power supply IC 206 through a signal path (signal line) L1 not including a sub-CPU (sub-processor). Since a sub-CPU and a power supply for the sub-CPU are not required, it is possible to reduce power consumption, simplify the configuration, and reduce the burden on software.

In addition, the power supply IC 206 has an activation signal receiving unit 240 that receives the activation signal INH-Vlevel for the power supply IC, a detection unit 242 that includes a comparator 244 that compares the received activation signal INH-Vlevel for the power supply IC with a reference voltage Vref and accordingly determines whether the received activation signal ENH-Vlevel for the power supply IC is a disable level (L) or an enable level (H), a priority wake-up processing unit 246, a power generation unit 248 that generates a power supply voltage VCC, a reset unit (RS) 250 that outputs a reset signal RES to the CPU 204, and a second SPI interface unit (I/F) 252.

In addition, the first and second SPI interface units (I/F) 226 and 252 may be simply referred to as first and second interfaces. The first and second SPI interface units (I/F) 226 and 252 are synchronous data communication interfaces that transfer data in synchronization with clock edges. Providing this interface enables the CAN communication circuit 202 to use the SPI, which is a highly reliable communication interface.

The CAN communication circuit 202 has a novel configuration that combines the data communication interface 226 for performing synchronous communication with the CPU 204 and a signal output terminal INH (in a broad sense, a data communication interface) for performing voltage level data communication with the power supply IC 206.

In addition, a first SPI bus SPI-BUS1 and a second SPI bus SPI-BUS2 each have a communication line for a data transfer clock SCLK, a communication line for input data MOSI, a communication line for output data MISO, and a communication line for a chip select signal CS. The input data MOSI and the output data MISO are transferred in synchronization with the rising edge or falling edge of the clock SCLK.

In addition, the CPU 204 has SPI interfaces 227 and 253.

When a wake-up command is received, the activation signal generation unit 228 in the CAN communication circuit 202 sets the activation signal INH-Vlevel for the power supply IC as a voltage level signal to the enable level (H level).

In addition, when a sleep command is received, the CAN communication circuit 202 transmits the received sleep command to the CPU 204 through the first SPI bus SPI-BUS1.

When the sleep command transmitted from the CAN communication circuit 202 is received, the CPU 204 decodes the command and transmits a sleep instruction to the CAN communication circuit 202, and also transmits a power supply stop instruction to the power supply IC 206.

When attempting to stop the power supply according to the power supply stop instruction transmitted from the CPU 204, the priority wake-up processing unit 246 of the power supply IC 206 determines whether or not the activation signal INH-Vlevel for the power supply IC transmitted from the CAN communication circuit 202 is at an enable level (H level), in other words, whether or not the enable level (H level) is being maintained.

When the enable level (H level) is maintained, the priority wake-up processing unit 246 continues generating the power supply voltage VCC by giving priority to the activation of the power supply IC 206 due to the activation signal INH-Vlevel for the power supply IC being enabled over the power supply stop instruction.

By using the voltage level signal, instead of the edge trigger type activation signal, as an activation signal for the power supply IC 206, the enable level is maintained even after the sleep command is received, thereby providing the power supply IC 206 with sufficient time to detect the enable level.

In other words, the priority wake-up processing unit 246 can determine whether or not the activation signal INH-Vlevel for the power supply IC is at the enable level, for example, at the timing when the power supply is to be stopped, and as a result of this determination, the power supply IC 206 can recognize that the wake-up command has been received. Therefore, the generation of the power supply voltage VCC continues, and no unnecessary power supply stop occurs.

The ECUm in FIG. 4 has a simplified configuration and does not require complex signal processing. This is advantageous for reducing the size and power consumption of an electronic control device (ECU).

In addition, the power supply IC 206 has the reset unit (RS) 250. When the power supply IC 206 continues generating the power supply voltage, the power supply voltage VCC is also supplied to the CPU 204, and the CPU 204 continues to operate.

In the present embodiment, at this time, the reset unit (RS) 250 outputs the reset signal RES to the CPU 204 to reset the CPU 204.

In other words, once a wake-up command is received, the CPU 204 is reset and starts its operation from the initialized state (initial start).

When the CPU 204 is reset, for example, various counters, timers, input/output ports, and the like are initialized, so that the internal state of the CPU 204 returns to a predetermined initial state.

As a result, even if, for example, a partial trouble occurs inside the CPU 204, its state returns to a predetermined initial state by reset. Therefore, various programs can be started normally.

This reduces the possibility of an abnormality (failure) occurring in the processor in the future, thereby contributing to suppressing a decrease in the reliability of the processor.

In addition, the state of the power supply IC 206 may transition to an initial state so that the reset signal RES is output from the reset unit (RS) 250 of the power supply IC 206.

In other words, a power-on reset function of the power supply IC 206, that is, a function of outputting the reset signal RES to the CPU 204 when the power supply is turned on to start from the initial state, is used to enable the output of the reset signal RES.

In this case, the reset signal can be output using an existing function of the power supply IC 206, and no special processing is required to output the reset signal, thereby reducing the burden on the power supply IC 206.

Next, reference is made to FIG. 5. FIG. 5 is a drawing showing a wake-up operation during power supply stop in the electronic control unit according to the embodiment of the invention.

Area A-1 in FIG. 5 shows a simplified version of the configuration in FIG. 4, and is substantially the same configuration as A-2 in FIG. 2 shown above. Area A-2 in FIG. 5 shows a timing chart showing a wake-up operation during power supply stop.

At time t10, the power supply voltage VCC becomes 5 V, and accordingly, the activation signal INH-Vlevel for the power supply IC has an enable level (H level).

In addition, the voltage at the ENA terminal of the power supply IC 206 changes according to the voltage level of the activation signal INH-Vlevel for the power supply IC.

At time t11, the reset signal RES changes from L to H. At time t12, the CPU 204 outputs a sleep instruction. Accordingly, at time t13, the activation signal INH-Vlevel for the power supply IC has a disable level (L level).

In addition, at time t13, the CPU 204 outputs a power supply stop instruction. The period from time t13 to time t15 is a power supply stop processing period T1.

At time t14, a wake-up command is received. Accordingly, at time t14, the activation signal INH-Vlevel for the power supply IC has an enable level (H level). This enable level (H level) continues during the latter half period T2 of the power supply stop processing period T1.

At time t15 that is the end point of the power supply stop processing period T1, the enable level (H level) of the activation signal INH-Vlevel for the power supply IC continues. Therefore, the priority wake-up processing unit 246 of the power supply IC 206 gives priority to processing based on the wake-up command. Therefore, even after time t15, the power supply voltage VCC remains at 5 V, and no unnecessary power supply stop occurs.

In addition, at time t15, the reset signal RES changes from low level to high level, generating a rising edge. Accordingly, the CPU 204 is reset and initialized. In other words, an initial start of the CPU 204 is realized.

Next, reference is made to FIG. 6. FIG. 6 is a drawing showing an example of the configuration of an electronic control device to which a monitoring circuit is added.

In FIG. 6, a monitoring circuit for the activation signal for the power supply IC (hereinafter, simply referred to as a monitoring circuit) 260 is added to the configuration shown in A-1 in FIG. 5.

The monitoring circuit 260 is provided between the CPU 204 and a signal path L1 for transmitting the activation signal INH-Vlevel for the power supply IC, which is output from the CAN communication circuit 202, to the power supply IC 206.

The monitoring circuit 260 has a voltage holding circuit including a resistor R1 and a capacitor C1, a base resistor R2, an NPN transistor TR1, a load resistor R3, and a bias resistor R4 for generating a bias voltage between the base and emitter of the NPN transistor TR1.

When the activation signal INH-Vlevel for the power supply IC is at the disable level (L level), the NPN transistor TR1 is turned off, and accordingly, a monitoring terminal CH of the CPU 204 has the level (H) of the power supply voltage VCC.

On the other hand, when the activation signal INH-Vlevel for the power supply IC is at the enable level (H level), the NPN transistor TR1 is turned on, and accordingly, a collector current flows through the load resistor R3 and a voltage drop occurs. Therefore, the monitoring terminal CH of the CPU 204 has a voltage (L) obtained by subtracting the voltage drop from the power supply voltage VCC.

That is, the CPU 204 can monitor the voltage level of the activation signal INH-Vlevel for the power supply IC by detecting the voltage of the monitoring terminal CH. That is, the CPU 204 can detect, through the monitoring circuit 260, whether the activation signal INH-Vlevel for the power supply IC is at the enable level (H) or the disable level (L), for example.

For example, when the CAN communication circuit 202 receives a sleep command, as described above, the sleep command is transmitted to the CPU 204, and the CPU 204 decodes the sleep command and transmits a sleep instruction to the CAN communication circuit 202.

When the CAN communication circuit 202 goes into a sleep state, the activation signal INH-Vlevel for the power supply IC changes from the enable level (H) to the disable level (L).

The CPU 204 can determine whether or not the CAN communication circuit 202 is operating correctly according to the sleep instruction by detecting the occurrence of a change in the voltage level through the monitoring circuit 260.

If there is no change in the voltage level of the activation signal INH-Vlevel for the power supply IC even after CPU 204 issues a sleep instruction to the CAN communication circuit 202, it can be inferred that there is an abnormality in the CAN communication circuit 202, or an abnormality in the communication path (SPI-BUS1) between the CAN communication circuit 202 and the CPU 204, or an abnormality in the monitoring circuit 260, and predetermined measures can be taken.

The predetermined measures are, for example, notifying the user of the abnormality, restarting the ECU, and the like.

Being able to quickly take appropriate measures contributes to suppressing a decrease in the reliability of the electronic control device (ECU).

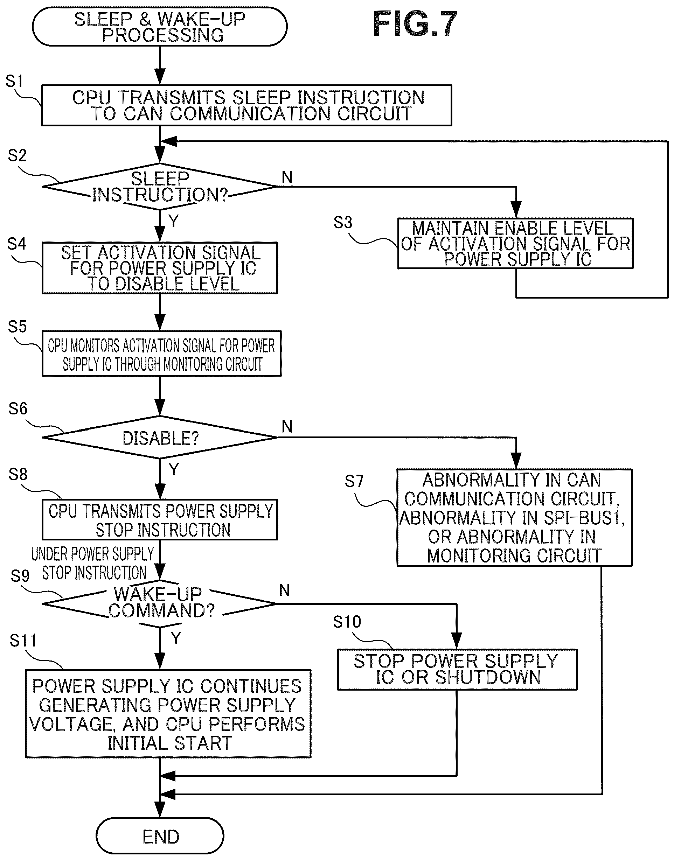

Next, reference is made to FIG. 7. FIG. 7 is a flowchart showing an example of a procedure for sleep and wake-up processing in the electronic control unit in FIG. 6.

In step S1, the CPU receives a sleep command and transmits a sleep instruction to the CAN communication circuit. In step S2, the CAN communication circuit determines whether or not there is a sleep instruction.

If N in step S2, in step S3, the CAN communication circuit maintains the enable level of the activation signal for the power supply IC.

If YES in step S2, in step S4, the CAN communication circuit sets the activation signal for the power supply IC to a disable level.

In step S5, the CPU monitors the voltage level of the activation signal for the power supply IC through the monitoring circuit.

In step S6, the CPU determines whether or not the activation signal for the power supply IC is at a disable level.

If N in step S6, the level of the activation signal for the power supply IC is not a level corresponding to the sleep instruction transmitted in step S1. Therefore, in step S7, the CPU determines that there is an abnormality in the CAN communication circuit, or an abnormality in SPI-BUS1, or an abnormality in the monitoring circuit.

If Y in step S6, in step S8, the CPU transmits a power supply stop instruction to the power supply IC.

In step S9, the power supply IC determines whether or not a wake-up command has been received, that is, whether or not the activation signal for the power supply IC is at the enable level, during the continuation of the power supply stop instruction, that is, during the continuation of the power supply stop processing.

If N in step S9, in step S10, the CPU performs power supply stop or shutdown according to the sleep instruction.

If Y in step S9, in step S11, the power supply IC continues generating the power supply voltage by giving priority to the fact that the activation signal for the power supply IC is at the enable level, while the CPU is reset by the reset signal from the power supply IC and executes the start of operation from the initial state (initial start).

As described above, according to the embodiment of the invention, since a sub-processor (sub-CPU) is not used in the electronic control device, it is possible to significantly reduce power consumption. As a result, it is possible to promote low power consumption in the electronic control system.

In addition, the electronic control device has a simplified configuration in which the activation signal for the power supply IC is a voltage level signal and a priority wake-up processing unit is provided in the power supply IC. Therefore, it is possible to realize a smaller electronic control device, a lower cost, and a reduced processing load on the electronic control device.

In addition, when the communication circuit receives a wake-up command during power supply stop processing of the power supply IC, it is possible to avoid unintended power supply stop.

In addition, by resetting the CPU or by providing a monitoring circuit to monitor the voltage level of the activation signal for the power supply IC, it is possible to suppress a decrease in the reliability of the electronic control device.

In addition, even if a sleep command is received immediately after the electronic control device is activated, the electronic control device can be caused to transition to a sleep state according to the sleep command.

Thus, the electronic control device of the invention has a function of further reducing power consumption while maintaining necessary functions or reliability as described above.

Therefore, it is possible to obtain an effect of significant reduction in power consumption for the entire electronic control system while maintaining reliability.

In recent years, the number of electronic devices installed in a vehicle has increased, and accordingly, the power consumption of an electronic control system tends to increase. In particular, there is a growing demand to reduce standby current (parasitic current) while the vehicle is stopped, which directly leads to a drop in battery voltage.

According to the invention, it is possible to meet the demand described above. This contributes to the realization of, for example, electric cars, electric two-wheeled vehicles, and the like that can operate for a long time with a single battery charge.

While the embodiment of the invention has been described above, the invention is not limited to the above embodiment, and various modifications and applications are possible.

For example, the electronic control device and the electronic control system of the invention can be mounted in electric vehicles and so-called hybrid vehicles, and can also be used for marine applications and general industrial applications.

### INDUSTRIAL APPLICABILITY

The invention is suitable, for example, as an electronic control device and an electronic control system mounted in a vehicle.

### EXPLANATIONS OF LETTERS OR NUMERALS

10 UPPER-LEVEL DEVICE
20 SENSOR
30a, 30b TERMINATION RESISTOR
40 POWER LINE
102 ANOTHER DEVICE CONNECTED TO NETWORK (POWER CONTROL ECU OR THE LIKE)
104 SELECTIVE WAKE-UP/SLEEP COMMUNICATION UNIT
150 ELECTRONIC CONTROL SYSTEM
200 ECU GROUP
202 CAN COMMUNICATION CIRCUIT (COMMUNICATION CIRCUIT)
204 CPU (CENTRAL PROCESSING UNIT, PROCESSOR)
206 POWER SUPPLY IC (POWER SUPPLY CIRCUIT, INTEGRATED CIRCUIT FOR POWER SUPPLY)
220 COMMON MODE FILTER
222 TRANSCEIVER (CAN TRANSCEIVER)
224 CAN CONTROLLER
226 FIRST INTERFACE UNIT (FIRST SPI INTERFACE UNIT)
227 SPI INTERFACE UNIT
228 ACTIVATION SIGNAL GENERATION UNIT (ACTIVATION SIGNAL GENERATION UNIT FOR POWER SUPPLY IC)
240 ACTIVATION SIGNAL RECEIVING UNIT (ACTIVATION SIGNAL RECEIVING UNIT OF POWER SUPPLY IC)
242 DETERMINATION UNIT
244 COMPARATOR (COMPARISON UNIT)
246 PRIORITY WAKE-UP PROCESSING UNIT
250 RESET UNIT (RESET CIRCUIT)
252 SECOND INTERFACE UNIT (SECOND SPI INTERFACE SUl)
253 SPI INTERFACE UNIT
260 MONITORING CIRCUIT
BATT BATTERY
ECU (ECU1 TO ECUm) ELECTRONIC CONTROL UNIT AS ELECTRONIC CONTROL DEVICE
INH-Vlevel ACTIVATION SIGNAL FOR POWER SUPPLY IC (VOLTAGE LEVEL SIGNAL, ACTIVATION SIGNAL FOR POWER SUPPLY IC THAT IS VOLTAGE LEVEL SIGNAL)
RES RESET SIGNAL
SPI-BUS1 FIRST SPI BUS
SPI-BUS2 SECOND SPI BUS

## Claims

1. An electronic control device connected to a network, comprising:
a processor that controls an operation of the electronic control device;
a communication circuit that receives a sleep command and a wake-up command from another device connected through the network and includes a first interface for communication with the processor; and
a power supply IC that generates a power supply voltage and includes a second interface for communication with the processor,
the communication circuit includes an activation signal generation unit that sets an activation signal for the power supply IC as a voltage level signal to an enable level when the wake-up command is received, and the communication circuit transmits the received sleep command to the processor through the first interface,
when the sleep command transmitted from the communication circuit is received, the processor transmits a sleep instruction to the communication circuit and transmits a power supply stop instruction to the power supply IC, and
the power supply IC includes a priority wake-up processing unit that, when attempting to stop a power supply according to the power supply stop instruction transmitted from the processor, continues generating the power supply voltage by giving priority to activation of the power supply IC due to the activation signal for the power supply IC being enabled over the power supply stop instruction when the enable level of the activation signal for the power supply IC transmitted from the communication circuit is maintained.

2. The electronic control device according to claim 1,
the activation signal for the power supply IC is transmitted from the communication circuit to the power supply IC through a signal path that does not go through a sub-processor.

3. The electronic control device according to claim 1,
the first interface and the second interface are communication interfaces that transmit and receive data in synchronization with a rising edge or a falling edge of a clock.

4. The electronic control device according to claim 1,
a monitoring circuit for the activation signal for the power supply IC is provided between the processor and a signal path for transmitting the activation signal for the power supply IC output from the communication circuit to the power supply IC, the monitoring circuit monitoring a level of the activation signal for the power supply IC.

5. The electronic control device according to claim 1,
the power supply IC includes a reset unit that outputs a reset signal to reset the processor, and
when the priority wake-up processing unit continues generating the power supply voltage by giving priority to activation of the power supply IC due to the activation signal for the power supply IC being enabled, the reset signal is output from the reset unit to cause an initial start of the processor.

6. The electronic control device according to claim 5,
a state of the power supply IC transitions to an initial state so that the reset signal is output from the reset unit of the power supply IC.

7. An electronic control system, comprising:
a plurality of the electronic control devices according to any one of claims 1 to 6, the plurality of electronic control devices being connected to the network.
